# EUROPEAN PATENT APPLICATION

(11) **EP 2 051 485 A1**
(43) Date of publication of application: **22.04.2009**
(21) Application number: 07118432.9
(22) Date of filing: 15.10.2007
(51) Int. Cl.: H04M 1/02

(54) **Electronic device with a display unit being movable in relation to a base unit**

(71) Applicant: Sony Ericsson Mobile Communications AB, 221 88 Lund (SE)
(72) Inventor: Sörensson, Stefan, S-24734 Södra Sanby (SE); Larsson, Mats, S-24441 Kävlinge (SE); Heringslack, Henrik, S-21218 Malmö (SE)
(74) Representative: Valea AB

(57) **Abstract**

The invention relates to an electronic device and a method for controlling functionality of such an electronic device in relation to a display unit. The electronic device includes a base unit (3); a display unit (2), an orientation sensing arrangement and an orientation determining unit. The display unit (2) has a first surface area and a second surface area (13) joined to each other by a first and second opposite bounding side and is fastened to and movable in relation to the base unit (3). The orientation sensing arrangement comprises a first sensing unit (15) on the display unit (2) and a second sensing unit (16) on the base unit (3), which arrangement detects that the sensing units are able to communicate with each other and indicates this communication. The orientation determining unit then activates selected functionality of the electronic device based on the indication from the orientation sensing arrangement.

## Description

### FIELD OF THE INVENTION

The invention relates to electronic devices having display units that are moveable in relation to base units. The present invention is more particularly related to an electronic device and a method for controlling functionality of an electronic device in relation to a display unit.

### BACKGROUND OF THE INVENTION

Electronic devices, in general, and portable electronic devices such as personal digital assistants (PDA), laptop computers, in particular, as well as portable communication devices such as mobile phones, are becoming increasingly powerful and complex. More functionality is incorporated into the devices and this requires them to be more flexible in terms of user interaction, both in displaying information and also in receiving data. This becomes especially apparent in portable electronic devices, which are normally smaller than other consumer electronics products. More refined keyboards, user interaction means and connections are added to portable devices to enhance usability. Likewise, more refined ways of displaying information is added to portable electronic devices. This becomes especially apparent for the display component incorporated in portable electronic devices. For portable electronic devices one challenge is to increase the display area without increasing the bulkiness of the portable electronic device and at the same time keeping energy consumption at a minimum.

In order to save space and make the portable electronic devices more compact the display is sometimes foldable, e.g. in "clamshell"-type mobile phones. To minimize power consumption the display is only activated when the "clam-shell"-type mobile phone is unfolded. Minimizing power consumption is a key, especially for portable electronic devices.

For such electronic devices the display can be seen as provided in a display unit which is attached to and movable in relation to a base unit. However, in relation to such clam shell phones and other electronic devices where one display unit is movable in relation to a base unit, it would be of interest to increase the flexibility of the electronic device.

### SUMMARY OF THE INVENTION

The present invention is therefore directed towards solving the problem of making a compact electronic device that has a display unit attached to a base unit more flexible. This is done by activating selected functionality of the electronic device based on the orientation of the display unit in relation to the base unit.

One object of the present invention is thus directed towards providing an electronic device with increased flexibility in user-device interaction while keeping the device bulkiness at a minimum.

A first aspect of the present invention is therefore directed towards an electronic device comprising:
- a base unit;
- a display unit, comprising a first surface area and a second surface area joined to each other by a first and second opposite bounding side, said display unit being fastened to and movable in relation to the base unit;
- an orientation sensing arrangement comprising
   a first sensing unit provided on the display unit, and
   a second sensing unit provided on the base unit; said arrangement being arranged to detect that the sensing units are able to communicate with each other and indicate this communication; and
- an orientation determining unit arranged to activate selected functionality of the electronic device based on an indication received from the orientation sensing arrangement.

A second aspect of the present invention includes the features of the first aspect, wherein the first sensing unit is provided at least partly on the second surface area, one of the sensing units is an elongated sensing unit and the other sensing unit is a spot sensing unit.

A third aspect of the present invention includes the features of the second aspect, wherein the first sensing unit is partly provided on a part of the first bounding side.

A fourth aspect of the present invention includes the features of the third aspect, wherein the first sensing unit stretches up to a position before a half-way line between the first and second surface areas on the first bounding side.

A fifth aspect of the present invention includes the features of the third aspect, wherein the first sensing unit stretches past the half-way line between the first and second surface areas on the first bounding side.

A sixth aspect of the present invention includes the features of the second aspect, wherein at least the first bounding side is curved.

A seventh aspect of the present invention includes the features of the second aspect, wherein the first sensing unit is the elongated sensing unit.

An eighth aspect of the present invention includes the features of the seventh aspect, wherein the part of the first sensing unit provided on the second surface area stretches from the first bounding side towards the second bounding side.

A ninth aspect of the present invention includes the features of the eighth aspect, wherein the part of the first sensing unit provided on the second surface area stretches up to the second bounding side.

A tenth aspect of the present invention includes the features of the ninth aspect, wherein the first sensing unit is provided also on at least a part of the second bounding side.

An eleventh aspect of the present invention includes the features of the eighth aspect, wherein there is a gap between the part of the first sensing unit provided on the second surface area and the second bounding side.

A twelfth aspect of the present invention includes the features of the second aspect, wherein the sensing arrangement is further arranged to detect and indicate a position of the first sensing unit in the direction of elongation and used in communication between the first and second sensing units and the orientation determining unit is further arranged to activate selected functionality of the electronic device related to the display unit based also on said position.

A thirteenth aspect of the present invention includes the features of the first aspect, wherein the display unit comprises a first display on the first surface area and a second display on the second surface area.

A fourteenth aspect of the present invention includes the features of the thirteenth aspect, wherein the orientation determining unit is arranged to activate functionality associated with the first display if it receives an indication of the first and second sensing units being able to communicate with each other from the orientation sensing arrangement and otherwise to activate functionality associated with the second display.

A fifteenth aspect of the present invention includes the features of the fourteenth aspect, wherein the orientation determining unit is arranged to deactivate functionality associated with the second display if it receives an indication of the first and second sensing units being able to communicate with each other and otherwise to deactivate functionality associated with the first display.

A sixteenth aspect of the present invention includes the features of the first aspect, wherein at least one of sensing units in the orientation sensing arrangement is partly electrically conductive, and the arrangement when being arranged to detect that the sensing units are able to communicate with each other is arranged to detect said communication through sensing a resistive, capacitive, or inductive change in the relationship between the sensing units.

A seventeenth aspect of the present invention includes the features of the first aspect, wherein at least one of the sensing units in the orientation sensing arrangement has an index of refraction that differs from the surrounding and the other is an optical detector, and said arrangement is arranged to detect that the sensing units are able to communicate with each other through the optical detector detecting a change in the index of refraction.

An eighteenth aspect of the present invention includes the features of the first aspect, wherein at least one of the sensing units in the orientation sensing arrangement is partly magnetic, and said arrangement when being arranged to detect that the sensing units are able to communicate with each other is arranged to detect a magnetic flux change caused by said one sensing unit.

A nineteenth aspect of the present invention includes the features of the first aspect, wherein the electronic device is a portable electronic device.

A twentieth aspect of the present invention includes the features of the nineteenth, wherein the portable electronic device is a portable communication device.

A twenty-first aspect of the present invention is directed towards a method for controlling functionality of an electronic device in relation to a display unit, the display unit comprising a first surface area and a second surface area joined to each other by a first and second opposite bounding sides and the display unit being fastened to and movable in relation to a base unit of the electronic device, comprising the steps of:
- detecting that a first sensing unit provided on the display unit and a second sensing unit provided on the base unit are able to communicate with each other;
- providing an indication for said communication; and
- activating selected functionality of the electronic device based on said indication.

A twenty-second aspect of the present invention includes the features of the twenty-first aspect, wherein the first sensing unit is provided at least partly on the second surface area, one of the sensing units is an elongated sensing unit and the other sensing unit is a spot sensing unit and the step of detecting comprises detecting a position of the elongated sensing unit used in communication between the first and second sensing units, the step of indicating comprising also indicating said position and the step of activating comprises activating selected functionality of the electronic device based also on said position.

A twenty-third aspect of the present invention includes the features of the twenty-first aspect, wherein the first surface area comprises a first display and the second surface area comprises a second display and the step of activating comprises activating functionality associated with the first display if the sensing units are able to communicate with each other and otherwise activating functionality associated with the second display.

A twenty-fourth aspect of the present invention includes the features of the twenty-third aspect, further comprising the step of deactivating functionality associated with the second display if the sensing units are able to communicate with each other and otherwise deactivating functionality associated with the first display.

The present invention has a number of advantages. It controls the use of functionality associated with the electronic device in order to among other things save energy while still allowing a user a great freedom of use of the device. This is furthermore done without the user doing anything else than selecting how to orient the display unit in relation to the base unit. The invention furthermore allows for a compact design of the electronic device without sacrificing usability.

### BRIEF DESCRIPTION OF THE DRAWINGS

For a better understanding of the invention, and to show more clearly how it may be carried out, reference will now be made, by way of illustration only, to the following drawings in which:
Fig. 1 shows a perspective view of an electronic device according to a first embodiment of the present invention including a base unit and a display unit;
Fig. 2 schematically shows a front view of the display unit in the electronic device of fig. 1;
Fig. 3 shows a side view of the display unit in order to illustrate an arrangement for allowing movement of the display unit in relation to the base unit;
Fig. 4 shows a front view of a base unit in order to illustrate the arrangement for allowing movement of the display unit in relation to the base unit;
Fig. 5 shows a perspective view of the electronic device according to the first embodiment of the present invention with another orientation of the display unit;
Fig. 6 shows a block diagram of various units and arrangements in the electronic device of the present invention for controlling functionality in relation to the orientation of the display unit;
Fig. 7 shows a flow chart of a number of method steps being performed in the electronic device of the present invention;
Fig. 8 a - e schematically show side views of some examples on how the display unit in the electronic device according to the first embodiment of the present invention can be moved in relation to the base unit;
Fig. 9 shows a perspective view of the electronic device according to a second embodiment of the present invention with an orientation of the display unit that is similar to the orientation in fig. 5; and
Fig. 10 shows a perspective view of the electronic device according to a third embodiment of the present invention with an orientation of the display unit that is similar to the orientation in fig. 5.

### DETAILED DESCRIPTION OF THE EMBODIMENTS

The present invention relates to an electronic device comprising a display unit that can be moved in relation to a base unit 3.

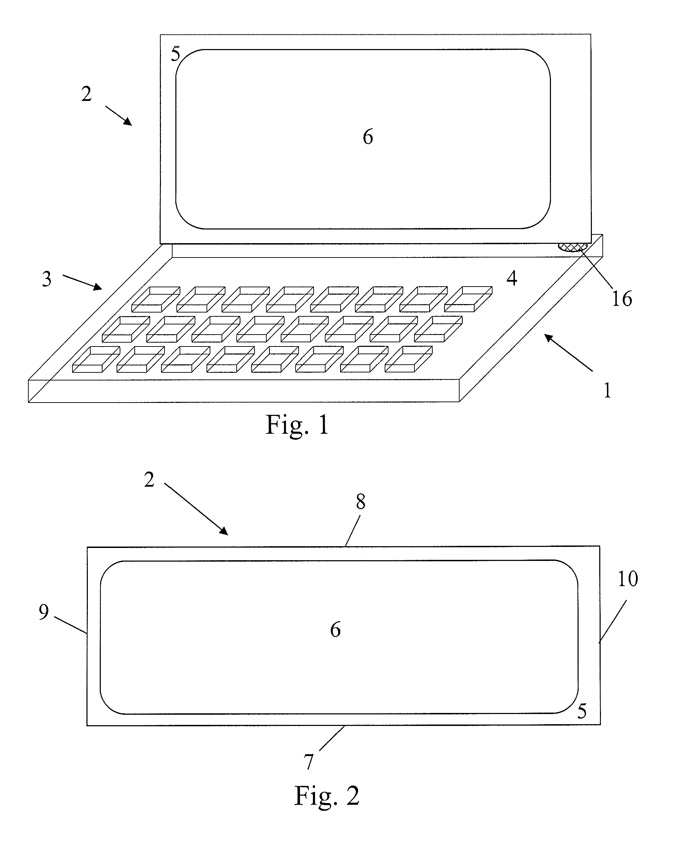

Figure 1 shows a perspective view of such an electronic device 1 according to the present invention. The electronic device 1 includes a base unit 3, which is here provided with user input units in the form of a keyboard or a keypad. The surface of the base unit 3 where the keyboard is provided is here named a mating surface 4. To this base unit 3 there is joined a display unit 2. The display unit 2 is being fastened to and movable in relation to the base unit 3. More particularly, the display unit 2 is being movable in relation to the mating surface 4 of the base unit 3. The display unit 2 has a first surface area 5, on which a first display 6 is provided. There is furthermore a second surface area opposite of the first surface area also including a display, i.e. a second display. This second surface area is provided on the opposite side of the first display area 5 and can therefore not be seen in fig. 1. The display unit 2 can be moved in relation to the base unit 3. This means that the various movements provided for the display unit 2 are made in relation to this mating surface 4. Fig. 1 furthermore shows the electronic device 1 with the display unit 2 in a position which is a "Lap top mode". This means that the display unit 2 is provided at an angle that is roughly between 90 and 135 degrees to the base unit 3, and here the first surface area 5 is provided at such an angle in relation to the mating surface 4. A "Lap top mode" allows a user to view the first display 6 while entering data using the keyboard of the mating surface 4. The device 1 according to the present invention is provided with a first sensing unit, which is here provided on the second surface area and can hence also not be seen in fig. 1 and a second sensing unit 16. The second sensing unit 16 is provided in a position where the display unit 2 is in contact with the base unit 3. As an example it is provided at a corner of the mating surface 4. The sensing units will be described in more detail later.

Fig. 2 shows a front view of the display unit 2 and its first surface area 5 with the first display 6. This first surface area 5 is bounded by a first bounding side 7, a second bounding side 8 as well as third and fourth bounding sides 9 and 10. The first and second bounding sides 7 and 8 are here parallel with each other, while the third and fourth bounding sides 9 and 10 are parallel with each other and provided at right angles to the first and second bounding sides 7 and 8.

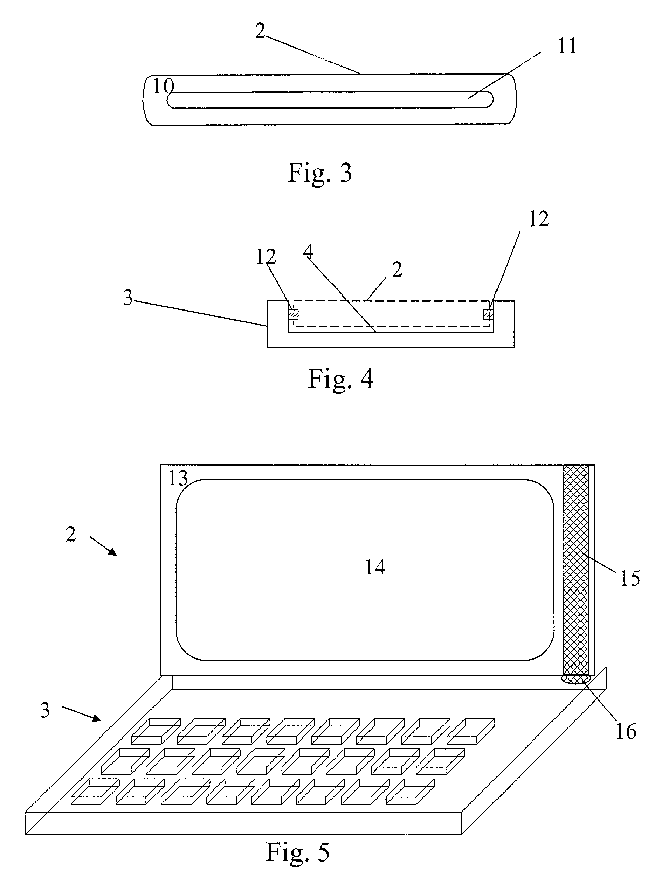

As mentioned above the display unit can be moved in various ways in relation to the base unit. An exemplifying mechanical arrangement that can provide such movement will now be described in relation to fig. 3 and 4, where fig. 3 shows a side view of the display unit 2 seen from the fourth bounding side 10 and fig. 4 shows a front view of the base unit 3.

As can be seen from fig. 3, the display unit includes a slot 11 in the fourth bounding side running between the first to the second bounding side. Also the third bounding side includes such a slot. In order to fasten the display unit 2 to the base unit 3, the base unit 3 is provided with two taps 12, one on each side of the mating surface 4. These taps 12 mate with the slots provided in the third and fourth bounding sides of the display unit 2. This is indicated by showing the display unit 2 as a dashed box in fig. 4. The taps 12 are furthermore preferably provided at opposite corners of the base unit 3. One tap 12 would therefore be provided adjacent a corner where the second sensing unit of fig. 1 is provided and the other tap at an opposite corner. The taps 12 are furthermore provided a distance above the mating surface 4. This distance is preferably a distance that allows the first and second bounding sides to turn around an axis defined by the taps when these bounding sides face the mating surface 4 of the base unit 3. With this provision of taps and slots it is possible to provide both rotational and translational movement of the display unit in relation to the base unit.

As mentioned before, the above described mechanical solution is just one way in which the movement of the display unit can be provided in relation to the base unit. Other ways are possible. It is for instance possible with other hinge or clamp solutions. It is furthermore possible to provide more advanced fastening means e.g. magnetic clamps. The display unit can be rotated or translated by the user of the electronic device or through the use of automatic means in the electronic device 1, such as an electrical motor.

Fig. 5 schematically shows an electronic device according to the first embodiment of the present invention in a view that is similar to the view in fig. 1. The difference here is that the display unit 2 has been rotated half a turn round a rotational axis made up of the above mentioned taps, so that now the second surface area 13 with the second display 14 is seen. The second surface area 13 here thus has the same orientation in relation to the base unit 3 as the first surface area had in fig. 1. As the display unit 2 has been rotated half a turn, the second bounding side here faces the second sensing unit 16. On the second surface area 13 there is furthermore provided the first sensing unit 15. The first sensing unit 15 is according to the first embodiment of the present invention an elongated sensing unit, which basically stretches on the second surface area 13 along the fourth bounding side from the first bounding side in a direction towards the second bounding side. Here it stretches all the way to the second bounding side. As an alternative it may not stretch as far. There may in this case be provided a small gap between the first sensing unit and the second bounding side. However, it is important that the direction of elongation of the first sensing unit 14 is perpendicular to the first and second bounding sides. It is also important that the second sensing unit 16 is aligned with the first sensing unit 15. This means that when the display unit 2 is moved such that the first sensing unit 15 faces the mating surface of the base unit 3, the first sensing unit 15 will pass over and face the second sensing unit 16. The combination of first and second sensing units 15 and 16 is here an orientation sensing arrangement. The first sensing unit 15 can furthermore be considered to be a line sensor, since it provides sensing ability along a line, while the second sensing unit may be considered to be a spot sensor, which provides sensing ability in a spot or in a limited area.

The sensing units may be made of materials that are able to detect changes in resistance, capacitance or magnetic flux. When the display unit is moved, either by translation, rotation, or a combination of the two, the two sensing units may come into proximity of or in contact with each other, which results in a change in resistance, capacitance or magnetic flux between them. This change is here sensed. The sensing units could be simple metal components. When the display unit is in a position relative to the base unit such that the sensing units are in physical contact there may be a reduction in resistance that is detected. The sensing units may also operate optically. The second sensing unit may include an integrated photodiode or camera sensor and a light source e.g. a light emitting diode (LED). The light from the light source may then be emitted from the second sensing unit and get reflected by the display unit 2 and detected by the photodiode. The first sensing unit may in such a realization be provided of a material with a refraction index that is different from the surrounding material and therefore result in a different reflection. In this way it is possible to determine if the sensing units are able to communicate with each other or not.

According to the first embodiment of the present invention the first elongated line sensor 15 stretches beyond the second surface area 5 and up onto the first bounding side. This will be shown in more detail later.

The displays described above preferably, have opposite projection directions. The displays accommodated on the first surface area and second surface area were above shown as having the same sizes. However, it should be realized that they can differ in size and also differ in the display technologies used.

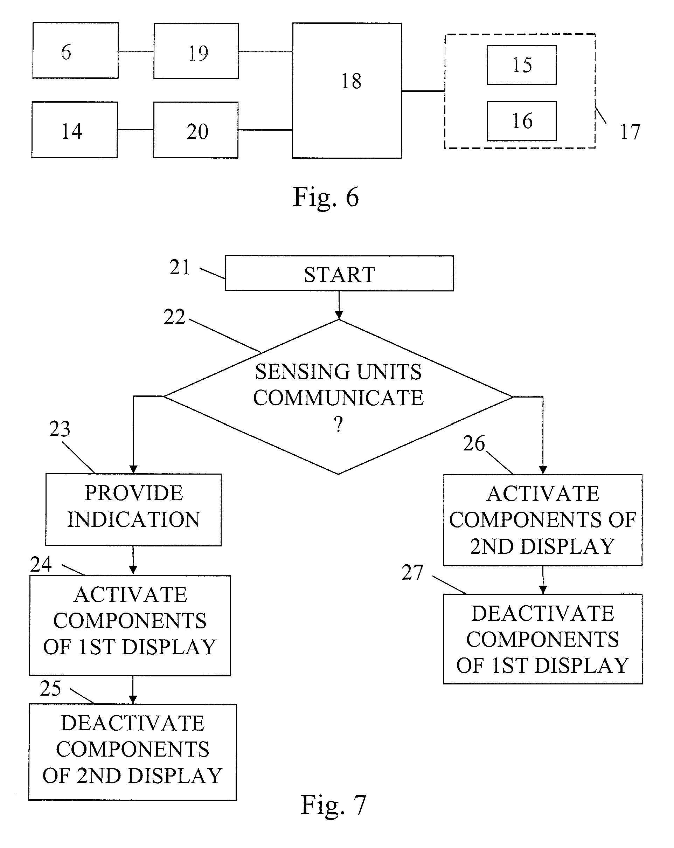

Fig. 6 shows a block schematic of a number of elements provided in the electronic device of the present invention. The orientation sensing arrangement 17, which thus includes the two sensing units 15 and 16, is connected to an orientation determining unit 18. The orientation determining unit 18 is connected to components associated with the first display and here driving circuits 19 for the first display 6 as well as to components associated with the second display and here driving circuits 20 for the second display 14. The driving circuits 19 and 20 are finally connected to the displays 6 and 14. Components associated with a display may be circuits used for providing such functionality as presenting information on the displays, but they may also be other circuits used for other functionality, for instance circuits providing front- or backlighting functionality.

The orientation determining unit may with advantage be provided in the form of a processor with accompanying memory comprising computer program code that provides selection of functionality according to a method that will to be described below. It may also be provided as a suitable programmed circuit such as an ASIC circuit.

Depending on how the orientation sensing arrangement is provided, either or both of the sensing units may communicate with the orientation determining unit 18. From a construction point of view, it may however be advantageous that the second sensing unit 16 is the one that communicates with the orientation determining unit 18, since the display unit is movable while the base unit is fixed.

With a display unit being provided with two displays and that can be moved as much as is indicated above, there are many instances when one of the displays cannot be seen or not used properly by a user of the device. Portable electronic devices are furthermore often battery powered. This means that if both are on or used all the time a lot of energy is wasted. This also means that the device may not be possible to use as long as is desirable without recharging the batteries. It is therefore of interest to limit the use of functionality associated with the electronic device, and especially associated with the display unit, while still allowing a user a great freedom of use of the device. It should thus be possible to selectively use the displays in order to save power. This should furthermore be possible to do without the user doing anything else than selecting how to orient the display unit in relation to the base unit.

The present invention is directed towards a way in which such dual displays can be selectively activated, where this selective use is provided automatically based on the orientation of the display unit in relation to the base unit.

A method according to which the electronic device can be operated for controlling functionality of an electronic device in relation to a display unit will now be described in relation to the previously mentioned fig. 5 as well as to fig. 6, which shows a flow chart of a number of method steps being performed according to the present invention.

As the method is started, step 21, the orientation sensing arrangement 17 senses if the sensing units 15 and 16 are able to communicate with each other or not. In case they are, step 22, an indication is provided to the orientation determining unit 18, step 23. The orientation determining unit 18 here then activates the component 19 associated with the first display 6, step 24, and also deactivates the components 20 associated with the second display 14, step 25. It thus activates the functionality provided by the component 19 and deactivates the functionality provided by the component 20. If however, the sensing units 15 and 16 are not able to communicate with each other, step 22, no indication is provided. The orientation determining unit 18 therefore instead activates the components 20 associated with the second display 14, step 26, and deactivates the components 19 associated with the first display 6, step 27. It thus activates the functionality provided by the component 20 and deactivates the functionality provided by the component 19.

Here it should be realized that as an alternative, the orientation sensing arrangement may provide two indications, one that indicates the sensing units are able to communicate with each other and another which indicates that they are not.

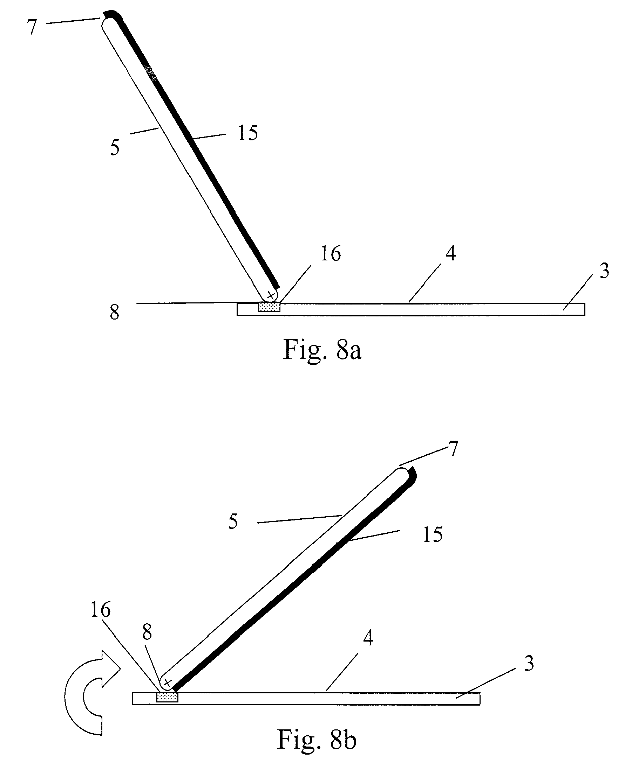

Fig. 8a - e show various orientations of the display unit in relation to the base unit according to the first embodiment of the present invention. As can be seen in fig. 8a - e the first sensing unit 15 has a first part that stretches from the second bounding side 8 and across the second surface area. This first part is joined to a second part which stretches on the first bounding side 7, which first bounding side is curved. In this first embodiment the second part stretches up to a position just before a halfway line between the first and second surface areas. In variations of the invention it is possible that it stretches past this half-way line. It may furthermore end just at this halfway line. As can also be seen both the first and the second bounding side 7 and 8 are curved. They may however be straight in some variations of the present invention.

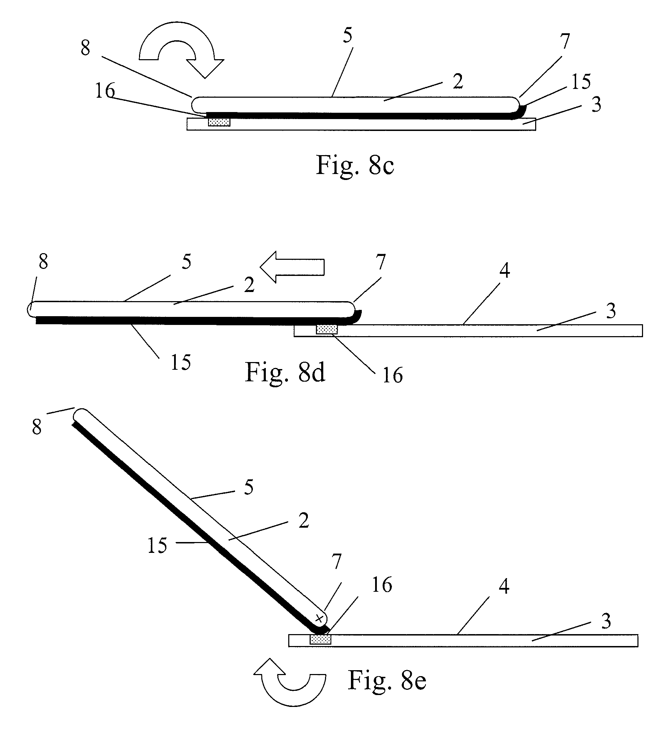

In fig. 8a the display unit 2 is tilted in relation to the base unit 3, with the second surface area carrying the elongated first sensing unit 15 forming an angle of about 120 degrees with the mating surface 4 of the base unit 3. Here the second bounding side 8 is in contact with the mating surface 4 of the base unit 3 at the second sensing unit 16. Here there is furthermore provided an axis of rotation that is defined by the previously mentioned taps. As can be seen in fig. 8a there is no contact between the two sensing units 15 and 16 and thus they cannot communicate with each other. This means that the second display provided on the second surface area is activated, while the first display on the first surface area 5 is deactivated. The display unit 2 can then be turned round this axis of rotation for example towards the mating surface 4 of the base unit 3. This is shown in fig. 8b, which shows the second surface area with the elongated first sensing unit 15 forming an angle of about 45 degrees with the mating surface 4 of the base unit 3. As this takes place the sensing units will be able to start to communicate with each other. This means that in fig. 8b there is a switching of the displays that are being activated. Thus here the first display on the first surface area 5 is being activated, while the second display on the second surface area is being deactivated. Fig. 8c shows how the display unit 2 has been rotated further round said axis of rotation such that now the second surface area is in contact with the mating surface of the base unit 3. Here the first display remains activated and the second display remains deactivated since there is continuous contact between the two sensing units 15 and 16. Fig. 8d then shows how the display unit 2 has been slid to the left so that now the first bounding side 7 of the display unit 2 gets closer to the second sensing unit 16 and the above mentioned taps. There is yet no change in activated display. Finally fig. 8e shows how the display unit 2 is turned upwards around the axis of rotation defined by the taps to an angle of about 135 degrees between the first surface area 5 and the mating surface 4 of the base unit 3. As can be seen there is still contact between the two sensing units 15 and 16, because the first sensing unit 15 stretches onto the first bounding side 7, which is in contact with the second sensing unit 16. This allows the first display to be the active display in the "Lap top mode". If now the display unit 2 is rotated further such that first surface area 5 gets closer to the mating surface 4, the contact between the sensing units 15 and 16 will cease and switching again be made of which display is active.

In this way it is ensured that the various displays are activated based on the orientation of the display unit in relation to the base unit. Through providing the first sensing unit so that it stretches onto the first bounding side, it is furthermore possible to provide the lap top mode. By varying how long it stretches onto this first bounding side it is furthermore possible to determine at which angles the lap top mode is to cease to apply.

The present invention controls the use of functionality associated with the electronic device, and especially associated with the display unit in order to among other things save energy while still allowing a user a great freedom of use of the device. This is furthermore done without the user doing anything else than selecting how to orient the display unit in relation to the base unit. The invention furthermore allows for a compact design of the electronic device without sacrificing usability.

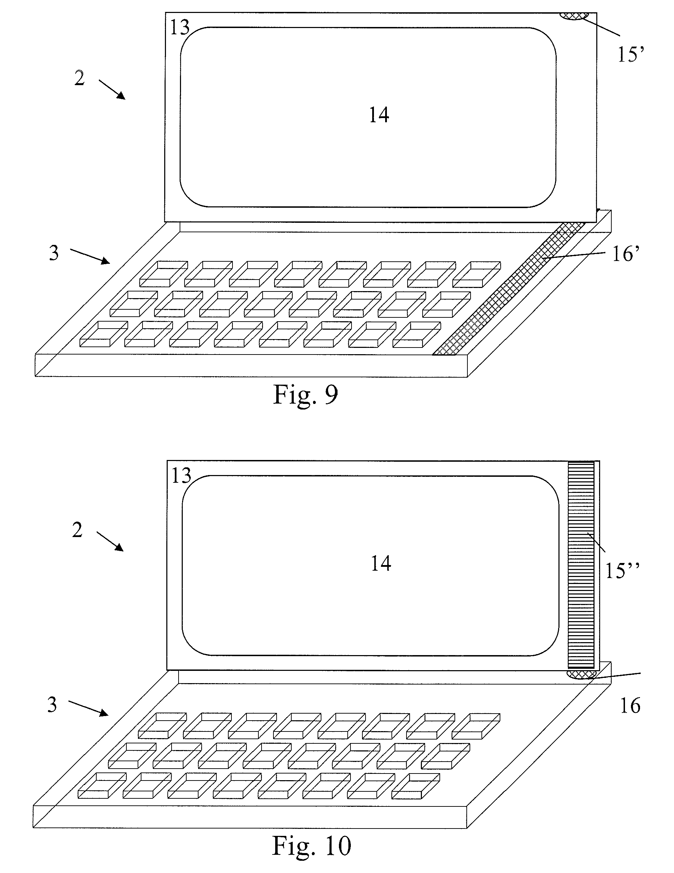

A second embodiment of the present invention will now be described in relation to fig. 9, which shows a perspective view of an alternative electronic device. In this embodiment it is the second sensing unit 16' that is an elongated line sensor, while the first sensing unit 15' is a spot sensor provided at a corner between the first and fourth bounding sides. The spot sensor 15' is here provided on the second surface area 13 and stretches out onto the first bounding side in order to provide the "Lap top mode". In this way it is possible to provide essentially the same functionality as in the first embodiment.

According to a third embodiment of the present invention that is shown in fig. 10, the first sensing unit 15" is again an elongated line sensor, while the second sensing unit 16 is a spot sensor. However in this embodiment the first sensing unit 15" is a sensor array, with a number of small independent sensors. In this way it is possible to detect which of these small sensors is in contact with the spot sensor 16. In this way it is furthermore possible to get an indication of the position of the display unit 2 in relation to the base unit in the direction of elongation in order to make a finer determination of what functionality that is to be activated and deactivated.

There are a number of variations that are possible to make of the present invention apart from those already discussed above. The invention has for instance been described in relation to a portable electronic device in the form of a lap top computer. However, the present invention can be applied also on other portable electronic devices, such as personal digital assistants (PDAs), gaming machines, portable DVD players and recorders. It may also be provided in a portable communication device such as a mobile phone, which may with advantage be a phone that is based on the clam-shell type, an enhanced clam-shell phone.

The first sensing unit was above described as stretching out onto the first bounding side. In alternatives of the present invention it may not do so, but only be provided on the second surface area. As yet an alternative it may, in addition to stretching out onto the first bounding side also stretch out onto the second bounding side. In the case of the second embodiment, there may in this case be two sensing units provided on the display unit.

The components controlled need furthermore not be limited to components associated with the displays. Other components could include illuminations means providing such functionality as highlighting keypad features or keypad buttons. For an electronic device as shown in Fig. 1 the buttons in the keypad could change assigned values depending on the relative position of the display unit. Similarly functionality such as software applications or operating systems could be activated or deactivated automatically depending on the relative position of the display unit.

It should also be realized that a keyboard or a keypad is no central part of the present invention, in fact the displays may themselves act as such user input units by being provided in the form of touch screens.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfill the functions of several units recited in the claims. Any reference signs in the claims shall not be construed so as to limit their scope. Therefore the present invention is only to be limited by the accompanying claims.

## Claims

1. An electronic device (1) comprising:
- a base unit (3);
- a display unit (2), comprising a first surface area (5) and a second surface area (13) joined to each other by a first and second opposite bounding side (7, 8), said display unit (2) being fastened to and movable in relation to the base unit (3);
- an orientation sensing arrangement (17) comprising
a first sensing unit (15; 15', 15") provided on the display unit (2), and a second sensing unit (16, 16') provided on the base unit (3); said arrangement being arranged to detect that the sensing units are able to communicate with each other and indicate this communication; and
- an orientation determining unit (18) arranged to activate selected functionality (19) of the electronic device (1) based on an indication received from the orientation sensing arrangement (17).

2. An electronic device (1) according to claim 1, wherein the first sensing unit (15, 15', 15") is provided at least partly on the second surface area (13), one of the sensing units is an elongated sensing unit and the other sensing unit is a spot sensing unit.

3. An electronic device (1) according to claim 2, wherein the first sensing unit (15, 15', 15") is partly provided on a part of the first bounding side (7).

4. An electronic device (1) according to claim 3, wherein the first sensing unit (15) stretches up to a position before a half-way line between the first and second surface areas on the first bounding side.

5. An electronic device (1) according to claim 3, wherein the first sensing unit (15) stretches past the half-way line between the first and second surface areas on the first bounding side.

6. An electronic device (1) according to any of claims 2 - 5, wherein at least the first bounding side is curved.

7. An electronic device (1) according to any of claims 2 - 6, wherein the first sensing unit is the elongated sensing unit.

8. An electronic device (1) according to claim 7, wherein the part of the first sensing unit provided on the second surface area stretches from the first bounding side towards the second bounding side.

9. An electronic device (1) according to claim 8, wherein the part of the first sensing unit provided on the second surface area stretches up to the second bounding side.

10. An electronic device (1) according to claim 9, wherein the first sensing unit is provided also on at least a part of the second bounding side.

11. An electronic device (1) according to claim 8, wherein there is a gap between the part of the first sensing unit provided on the second surface area and the second bounding side.

12. An electronic device (1) according to any of claims 2 - 11, wherein the sensing arrangement is further arranged to detect and indicate a position of the first sensing unit in the direction of elongation and used in communication between the first and second sensing units and the orientation determining unit is further arranged to activate selected functionality of the electronic device (1) related to the display unit based also on said position.

13. An electronic device (1) according to any previous claim, wherein the display unit (2) comprises a first display (6) on the first surface area (5) and a second display (14) on the second surface area (13).

14. An electronic device (1) according to claim 13, wherein the orientation determining unit (18) is arranged to activate functionality associated with the first display if it receives an indication of the first and second sensing units being able to communicate with each other from the orientation sensing arrangement and otherwise to activate functionality associated with the second display.

15. An electronic device (1) as according to claim 14, wherein the orientation determining unit (18) is arranged to deactivate functionality associated with the second display if it receives an indication of the first and second sensing units being able to communicate with each other and otherwise to deactivate functionality associated with the first display.

16. An electronic device (1) according to any previous claim, wherein at least one of sensing units in the orientation sensing arrangement is partly electrically conductive, and the arrangement when being arranged to detect that the sensing units are able to communicate with each other is arranged to detect said communication through sensing a resistive, capacitive, or inductive change in the relationship between the sensing units.

17. An electronic device (1) according to any of claims 1 - 15, wherein at least one of the sensing units in the orientation sensing arrangement has an index of refraction that differs from the surrounding and the other is an optical detector, and said arrangement is arranged to detect that the sensing units are able to communicate with each other through the optical detector detecting a change in the index of refraction.

18. An electronic device (1) according to any of claims 1 - 15, wherein at least one of the sensing units in the orientation sensing arrangement is partly magnetic, and said arrangement when being arranged to detect that the sensing units are able to communicate with each other is arranged to detect a magnetic flux change caused by said one sensing unit.

19. An electronic device (1) according to any previous claim, wherein the electronic device is a portable electronic device.

20. An electronic device (1) as claimed in claim 19, wherein the portable electronic device is a portable communication device.

21. A method for controlling functionality of an electronic device (1) in relation to a display unit (2), the display unit (2) comprising a first surface area (5) and a second surface area (13) joined to each other by a first and second opposite bounding sides (7, 8) and the display unit (2) being fastened to and movable in relation to a base unit (3) of the electronic device, comprising the steps of:
- detecting (22) that a first sensing unit (15; 15', 15") provided on the display unit (2) and a second sensing unit (16, 16') provided on the base unit (3) are able to communicate with each other;
- providing (23) an indication for said communication; and
- activating (24) selected functionality (19) of the electronic device (1) based on said indication.

22. A method according to claim 21, wherein the first sensing unit (15, 15', 15'') is provided at least partly on the second surface area (13), one of the sensing units is an elongated sensing unit and the other sensing unit is a spot sensing unit and the step of detecting comprises detecting a position of the elongated sensing unit used in communication between the first and second sensing units, the step of indicating comprising also indicating said position and the step of activating comprises activating selected functionality of the electronic device (1) based also on said position.

23. A method according to claim 21 or 22, wherein the first surface area (5) comprises a first display (6) and the second surface area (13) comprises a second display (14) and the step of activating comprises activating (24) functionality associated with the first display if the sensing units are able to communicate with each other and otherwise activating (26) functionality associated with the second display.

24. A method according to claim 23, further comprising the step of deactivating (25) functionality associated with the second display if the sensing units are able to communicate with each other and otherwise deactivating (27) functionality associated with the first display.
